# EUROPÄISCHE PATENTSCHRIFT

(11) **EP 0 859 200 B1**
(45) Veröffentlichungstag und Bekanntmachung des Hinweises auf die Patenterteilung: **15.05.2002**
(21) Anmeldenummer: 98102544.8
(22) Anmeldetag: 13.02.1998
(51) Int. Cl.: F24D 3/16, F24D 13/02

(54) **Heizpaneel**
Heating panel
Panneau chauffant

(30) Priorität: 13.02.1997 DE 29702534 U
(43) Veröffentlichungstag der Anmeldung: 19.08.1998
(73) Patentinhaber: Tever Technik, Vertriebs- und Beteiligungs-GmbH & Co. Beratungs KG, 83052 Bruckmühl (DE)
(72) Erfinder: Volke, Andreas, 83620 Feldkirchen-Westerham (DE); Volke, Günther, 83620 Feldkirchen-Westerham (DE)
(74) Vertreter: Viering, Jentschura & Partner

(56) Entgegenhaltungen:
- EP-A- 0 533 072
- WO-A-93/04490
- WO-A-96/21827
- DE-C- 19 526 057
- DE-U- 8 633 658
- US-A- 4 054 477

## Beschreibung

Die Erfindung betrifft ein Heizpaneel.

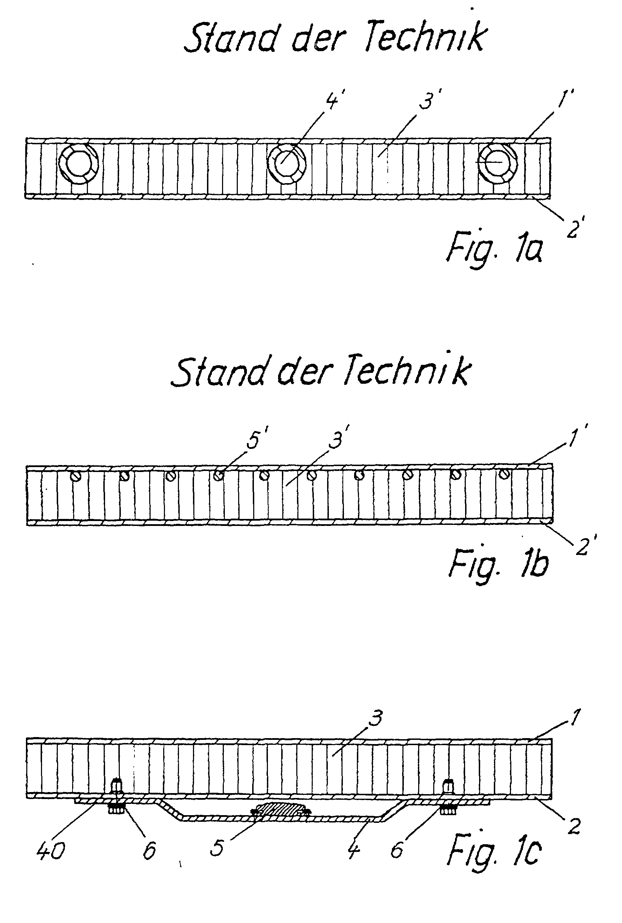

Aus der den Oberbegriff des Anspruchs 1 bildenden DE-U-92 09 999 ist ein zur Begrenzung von Innenräumen von Fahrzeugen, Gebäuden oder Behältern an Wänden, Decke und/oder Fußboden geeignetes Heizpaneel bekannt, das zum schnellen und wirksamen Heizen bei relativ geringem Gewicht und dennoch hoher Druckfestigkeit bzw. Steifigkeit anwendbar ist. Solche Heizpaneele sind aus den Figuren 1a und 1b ersichtlich. Diese Heizpaneele weisen einen Verbundaufbau mit einer metallischen Kernschicht 3' auf, die eine Wabenstruktur aufweist, insbesondere eine Honeycombstruktur mit im Querschnitt sechseckigen Wabenzellen. In der metallischen Kernschicht sind Heizelementen 4', 5' aufgenommen. Zwei die Kernschicht abdeckende Deckschichten 1', 2' sind auf die metallische Kernschicht 3' aufgeklebt, von denen wenigstens eine im wesentlichen aus einem wärmeleitenden Metallmaterial besteht. Eine derartige Verbundplatte mit Wabenstruktur stellt ein relativ druckfestes, steifes und Leichtes Bauelement dar und liefert eine schnelle und äußerst gleichmäßige Temperaturverteilung entsprechend der vom Feizelement abgegebenen Wärme. Solche Heizpaneele finden z.B. als tragende und gleichzeitig beheizte Bodenplatten in Fahrzeugen, insbesondere Schienenfahrzeugen, Anwendung.

Bei den oben beschriebenen herkömmlichen Heizpaneelen sind die Heizelemente 4', 5' in einem sich über die Kernschicht hin erstreckenden, mäanderförmigen Aufnahmekanal ausgebildet, in dem das Heizelement verläuft, das aus einem elektrischen Heizkabel 5' oder einer Rohrschlange 4' für Warmwasser besteht.

Ein Problem bei dem oben beschriebenen, herkömmlichen Heizpaneel liegt jedoch darin, daß Reparaturen an den im Inneren des Paneels ausgebildeten Heizelementen nicht vorgenommen werden können und diese auch nicht ausgewechselt werden können. Im Falle eines Defektes am Heizelement ist somit das gesamte Paneel unbrauchbar und muß gegen ein neues ausgetauscht werden. Ebenso ist ein Austausch des Heizelementes gegen ein möglicherweise erforderliches leistungsstärkeres Heizelement nicht möglich.

Ein weiteres Problem ist in dem komplizierten, mäanderförmigen Verlauf der Heizelemente zu sehen, welcher nach dem Stand der Technik unerläßlich war, um zu einer einigermäßen gleichmäßigen Wärmeverteilung über das gesamte Paneel zu kommen, beispielsweise von ± 5 K.

Aus der DE-U-8633658 ist ferner ein Heizpaneel mit einer Wärmeübertragungsplatte aus Stein bekannt, die an einer Außenseite eine Heizanordnung aufweist. Die Heizanordnung ist über eine Mehrzahl von Halterungen an einer Seite einer Wärmeverteil-Platte aus Metall befestigt, welche mit ihrer anderen Seite ganzflächig an der Steinplatte anliegt. Die von der Heizanordnung abgegebene Wärme wird direkt an die Wärmeverteil-Platte, und von dieser an die an ihr anliegenden Steinplatte übertragen. Mit dieser Anordnung sollen starke lokale Erwärmungen der Heizplatte vermieden werden.

Es ist eine Aufgabe der Erfindung, ein Heizpaneel der eingangs erwähnten Art zu schaffen, das zum schnellen und wirksamen Heizen bei relativ geringem Energieeinsatz (hohem Wirkungsgrad) und Gewicht und hoher Druckfestigkeit bzw. Steifigkeit anwendbar ist, das mit wenigen, leicht austauschbaren Heizelementen beheizbar ist, und das in einem großen Umgebungstemperaturbereich, von z.B. -30°C bis +25°C, eine ausreichend gleichmäßige Wärmeverteilung, von z.B. ± 3 K, über das gesamte Paneel gewährleistet.

Dies wird erreicht durch ein Heizpaneel mit den Merkmalen, dass an der Außenseite der Heizplatte eine Heizvorrichtung angebracht ist, die mindestens einen metallischen Heizflansch mit mindestens einem plattenförmigen Flanschrand und mindestens ein Heizelement aufweist, wobei das Heizelement an dem Heizflansch in wärmeleitender Verbindung mit diesem und über einen Luftspalt oder eine Wäremdämmschicht getrennt im Abstand von der Heizplatte angeordnet ist, an der der Heizflansch mit seinem Flanschrand wärmeleitend befestigt ist.

Der Flanschrand des Heizflansches verläuft mit seiner Ebene parallel zur Ebene der Heizplatte und liegt an dieser flächig unmittelbar an. Der Heizflansch kann als Winkelprofilschiene ausgebildet sein, die folgendermaßen gestaltet sein kann:
- als L-Profilschiene, von dessen einem L-Schenkel der Flanschrand gebildet wird und an dessen anderem L-Schenkel das Heizelement wärmeleitend anliegt und/oder wärmeleitend abgestützt ist,
- als Z-Profilschiene, von dessen einem Z-Schenkel der Flanschrand gebildet wird und an dessen anderem Z-Schenkel und/oder an dessen Z-Steg das Heizelement weärmeleitend abgestützt ist und/oder anliegt,
- als V- oder U-Profilschiene mit an den freien Enden der V-bzw. U-Schenkel nach innen oder - vorzugsweise - nach außen abgewinkelten Flanschrändern, wobei die U-Schenkel parallel zueinander oder schräg zum U-Steg nach innen oder - vorzugsweise- nach außen verlaufen können; eine derartige U-Profilschiene mit schräg nach außen verlaufenden oder parallelen U-Schenkeln wird im folgenden auch als Heizflansch bezeichnet, dessen Querschnitt dem einer Wanne entspricht.

Die Winkel der Winkelprofilschiene können mehr oder weniger stark abgerundet sein.

Der Heizflansch kann über die gesamte Länge oder Breite der Heizplatte hin durchlaufend ausgebildet sein. Vorzugsweise sind mehrere Heizflansche über die Heizplatte hin verteilt. Dabei können die Heizflansche auch als Schienenstücke ausgebildet sein, die beispielsweise in Gruppen verteilt an der Heizplatte angeordnet sind. Hierdurch ist es auch möglich, gewünschte Flächenbereiche von Heizflanschen freizuhalten oder durch entsprechende Verteilung der Heizflansche über die Heizplatte hin ein gewünschtes Wärmemuster zu erreichen.

Das Metallmaterial des Heizflansches kann beispielsweise ein Kupfermaterial sein, ist jedoch insbesondere aus einem Leichtmetall wie Aluminium oder einer Aluminiumlegierung.

Das im Abstand von der Heizplatte angeordnete Heizelement an dem dem Heizflansch kann wenigstens überwiegend über einen Luftspalt von der Heizplatte getrennt sein. Möglich ist jedoch auch, zwischen dem Heizelemt und der Heizplatte einen wärmedämmende Schicht auszubilden.

Die Seite, an der die Heizvorrichtung angeordnet ist, ist die Unterseite der Heizplatte, wenn diese als Bodenplatte angeordnet ist, die Oberseite der Heizplatte, wenn diese als Deckenplatte eingestzt ist, oder die Rückseite der Heizplatte bei der Anordnung des Heizpaneels als Wandpaneel.

Im Betrieb erzeugt das Heizelement infolge seiner hohen Temperatur am Ort seiner Anbringung lckal eine große Wärmemenge und gibt diese durch Wärmeleitung an den Heizflansch ab. Dieser Heizflansch wirkt als Wärmeverteiler, von dem die Wärme über den Flanschrand bzw. die Flanschränder flächig wärmeleitend an die Heizplatte übertragen. Auf diese Weise wird erreicht, daß sich die Heizplatte sehr gleichmäßig erwärmt. Im Betrieb wird eine Wärmeverteilung von z.B. ± 3 K auf 2 m² Heizfläche erreicht.

Wesentlich für die besonders gleichmäßige Wärmeverteilung bei dem erfindungsgemäßen Heizpaneel mit Heizflanschen ist also, daß die Wärme nicht punktuell oder linienförmig übertragen wird, wie es bei einer direkten Anbringung nicht flächenformiger Heizelemente an das Heizpaneel der Fall wäre, sondern über eine ausreichend große Fläche hin verteilt abgegeben wird. Dies bedeutet, daß das Heizelement den Heizflansch, an den es angebracht ist, erhitzt, ohne dabei in direktem Kontakt mit der Heizplatte zu stehen. Eine direkte Wärmeübertragung vom Heizelement zur Heizplatte erfolgt nur durch Wärmestrahlung deren Effekt relativ gering ist. Die von dem Heizelement an den Heizflansch übertragene Wärme wird dann über die Flanschränder des Heizflansches, die in flächigem wärmeleitenden Kontakt mit der Heizplatte stehen, an diese übertragen. Die Wärmeleitung, und damit die erzielbare gleichmäßige Wärmeverteilung, ist dabei umso besser, je größer die Materialstärke des Heizflansches ist.

Die Heizplatte kann mit einem oder mit mehreren, in Abständen voneinander angeordneten Heizflanschen versehen sein.

Bevorzugt sind die Heizflansche an der Heizplatte lösbar angebracht.

Die Heizflansche können jeweils mit nur einem Heizelement oder mit mehreren Heizelementen versehen sein.

Bevorzugt werden als Heizelemente PTC-Heizelemente verwendet. Die Verwendung von PTC-Heizelementen hat insbesondere folgenden Vorteil: Da der Widerstand von PTC-Leitern mit steigender Temperatur steigt, sinkt bei an eine konstante Spannung angelegten PTC-Heizelementen der Heizstrom mit steigender Temperatur, wodurch die Heizleistung reduziert wird. Somit wirken die PTC-Heizelemente für die Heizleistung selbstbegrenzend und können nicht überhitzen. Die erfindungsgemäßen, mittels PTC-Heizelementen beheizten Heizpaneele sind somit sehr langlebig. Auf diese Weise ist bei eingeschränktem Umgebungstemperaturbereich auch ein selbstregelnder Betrieb der Heizelemente möglich, bei dem die Heiztemperatur bei einem konstanten Wert verbleibt, der über die an die Heizelemente angelegte Spannung voreingestellt werden kann.

Ferner können als Heizelemente mit Vorteil Heizrohre mit rundem oder rechteckigem Querschnitt verwendet werden. Dies hat den Vorteil, das z.B. beim Betrieb von Maschinen anfallendes erwärmtes Kühlwasser zum Heizen des Paneels verwendbar ist. Typisch sind dabei die Wasserrohre derart angeordnet, daß sie in Längsrichtung der Heizflansche verlaufen und mit Schellen an den Bodenflächen derselben befestigt sind.

Zum Übertragen sehr großer Heizleistungen, d.h. zum Überbrücken großer Temperaturgefälle, wird ein Heizpaneel bevorzugt, bei dem der Heizflansch lediglich aus den Flanschränder besteht, die im Abstand voneinaner an der Heizplatte angeordnet sind, wobei das als Rechteckrohr ausgebildete Wasserrohr derart mit Bügeln am Heizflansch befestigt ist, daß es im Abstand von der Heizplatte angeordnet ist und an seiner Oberseite teilweise an den Flanschrändern anliegt.

Ist nur eine geringe Heizleistung erforderlich, so können als Heizelemente Heizkabel verwendet werden, die mäanderförmig auf den Heizflanschen angeordnet sind. Im Fall eines Defektes eines Heizkables ist es aufgrund seiner Anordnung auf dem an der Außenseite der Heizplatte lösbar angebrachten Heizflansch, im Gegensatz zu dem aus dem Stand der Technik bekannten Heizpaneel, leicht zugänglich und schnell austauschbar.

Auch wenn die PTC-Heizelemente selbstregelnd betreibbar sind, sind sie dennoch, genauso wie die Warmwasserheizvorrichtungen, bevorzugt an eine ihnen gemeinsame Reglereinheit für die Heizleistung angeschlossen. Ensprechende Reglereinheiten sind im Stand der Technik hinlänglich bekannt. Die Temperaturregelung erfolgt dabei im Falle der PTC-Elemente und der Heizkabel mittels einer Regelung des Heizstroms und im Falle der Warmwasserrohre mittels einer Regelung des Durchlaßquerschnitts von in den Warmwasserrohren vorgesehenen Magnetventilen, mit dem die Durchflußmenge des Warmwassers regelbar ist.

Die Reglereinheit kann von dem Heizpaneel getrennt oder auf der Unterseite bzw. Rückseite des Paneels angecrdnet sein. In beiden Fällen kann das Heizpaneel werksseitig vollständig vormontiert sein, so daß es einfach einbaubar ist und mit Steckverbindungen an die Reglereinheit anschließbar ist.

Ein für den Regelkreis erforderlicher Temperatursensor ist bevorzugt in das Paneel integriert.

Das Heizpaneel ist ohne Temperaturbegrenzer und/oder Reglereinheit zerstörungsfrei betreibbar, da mit steigender Temperatur der Heizelemente die Temperaturdifferenz zwischen denselben und der Heizplatte fällt. Die sinkende Temperaturdifferenz hat zur Folge, daß weniger Wärmeenergie übertragen wird, was einer Selbstregelung des Systems entspricht. Um eine vorbestimmte Temperatur jedoch nicht zu überschreiten, ist vorzugsweise ein Temperaturbegrenzer als Sicherung vorgesehen, der in das Heizpaneel integriert ist.

Vorzugsweise werden Temperatursensor und Temperaturbegrenzer in von oben zugänglichen und mit einem Deckel verschließbaren Aussparungen in der Heizplatte angeordnet. Auf diese Weise sind sie leicht zugänglich und können gegebenenfalls leicht geprüft oder ausgetauscht werden.

Gegenstände, wie z.B. ein Sitzgestell, können auf der Heizplatte z.B. durch Festkleben befestigt werden. Es ist jedoch vorteilhaft, wenn zur Befestigung von Gegenständen in die Heizplatte metallische Befestigungsbüchsen eingelassen, z.B. eingeklebt, oder Befestigungsbüchsen aus Kunststoff eingegossen sind, so daß die Gegenstände mittels Schraubverbindungen auf dem Heizpaneel befestigt werden können. Auf diese Weise lassen sich Umbauten auf dem Heizpaneel einfach bewerkstelligen. Im Falle der mit Heizflanschen versehenen Heizelemente können in diesem auch Aussparungen für Sitzgestelle und Durchführungen von Druckluft-, Hydraulik- und anderen Leitungen vorgesehen sein.

Das erfindungsgemäße Heizpaneel kann stationär, z.B. in Häusern, Fahrstühlen, etc. verwendet werden, bevorzugt wird es jedoch in mobilen Einrichtungen, wie z.B. Fahrzeugen verwendet, und besonders bevorzugt wird es in Schienenfahrzeugen verwendet.

Die Wabenstruktur kann im Querschnitt dreieckige, quadratische, rechteckige, runde oder ovale Waben aufweisen, bevorzugt weist sie jedoch eine Honeycombstruktur mit im Querschnitt sechseckigen Wabenzellen auf. Es hat sich gezeigt, daß sich auf diese Weise eine besonders hohe Stabilität, eine besonders gute Wärmeleitung sowie eine besonders gleichmäßige Wärmeverteilung erreichen läßt.

Bei Ausbildung der Heizplatte mit einer Kernschicht ist diese an der Oberseite und an der Unterseite mit Deckschichten belegt, wobei wenigstens die der Heizvorrichtung zugewandte Deckschicht als Metallschicht ausgebildet ist. Die Befestigung der Deckschichten an der Heizplatte erfolgt mit einem Kleber.

Die Kernschicht kann aus unterschiedlichen Metallen bzw. Metallegierungen sein, bevorzugt ist sie jedoch aus Aluminium oder einer Aluminiumlegierung. Ebenso können die Deckschichten aus unterschiedlichen Metallen oder Metallegierungen sein, bevorzugt sind sie jedoch ebenfalls aus Aluminium oder einer Aluminiumlegierung.

Weist das Paneel eine Metallschaumplatte, bevorzugt aufgeschäumtes Aluminium auf, so beträgt dessen Dichte bevorzugt etwa 25 % der Dichte von massivem Aluminium.

Die Zellen der Wabenstruktur können mit einem Schalldämpfungs- oder Schalldämmungsmaterial angefullt sein. Ferner kann das Heizpaneel nach unten zur Aussenseite hin thermisch und akustisch isoliert sein. Vorzugsweise wird eine solche Wärme- und Schallisolierung mit einer Korkauflage oder einer Mineralwollauflage erreicht, mit der auch der Heizflansch vollständig abgedeckt ist.

Die Erfindung wird nachfolgend anhand bevorzugter Ausführungsformen unter Bezugnahme auf die Zeichnung erläutert.

In der Zeichnung zeigen:
Figur 1a einen Schnitt eines herkömmlichen, mit Warmwasser beheizten Heizpaneels;
Figur 1b einen Schnitt eines herkömmlichen, elektrisch beheizten Heizpaneels;
Figur 1c einen Schnitt eines mit PTC-Heizelementen beheizten Heizpaneels gemäß einer bevorzugten Ausführungsform der Erfindung;
Figur 2 einen Schnitt zweier mit PTC-Heizelementen beheizter Heizepaneele gemäß einer bevorzugten Ausführungsform der Erfindung in eingebautem Zustand;
Figur 3 eine Draufsicht auf vier mit PTC-Heizelementen beheizte Heizpaneele gemäß einer bevorzugten Ausführungsform der Erfindung in eingebautem Zustand;
Figur 4a einen Teilschnitt eines Heizpaneels gemäß einer bevorzugten Ausführungsform der Erfindung, wobei das Heizpaneel einen Temperaturbegrenzer und einen Temperatursensor aufweist, welche in einer von oben zugänglichen und mit einem Deckel verschließbaren Aussparung in der Wabenstruktur vorgesehenen sind;
Figur 4b einen Teilschnitt durch ein Heizpaneel gemäß einer bevorzugten Ausführungsform der Erfindung, wobei das Heizpaneel eine auf dessen Unterseite angeordnete Reglereinheit aufweist;
Figur 5 einen Teilschnitt eines mit PTC-Heizelementen beheiztes Heizpaneel gemäß einer anderen bevorzugten Ausführungsform der Erfindung;
Figuren 6a und 6b Teilschnitte zwei verschiedener mit Warmwasser beheizter Heizpaneelen gemäß bevorzugter Ausführungsformen der Erfindung;
Figur 7 eine Draufsicht auf ein mit Warmwasser beheiztes Heizpaneel gemäß einer bevorzugten Ausführungsform der Erfindung; und
Figuren 8a und 8b jeweils einen Teilschnitt eines mit Warmwasser beheizten bzw. eines mit PTC-Heizelementen beheizten Heizpaneels aus aufgeschäumten Aluminium gemäß einer bevorzugten Ausführungsform der Erfindung.

Bei den im folgenden beschriebenen Ausführungsformen der Erfindung, die einen wannenförmigen Heizflansch verwenden, sind die Heizelemente jeweils auf der Inneseite, d.h. der der Heizplatte zugewandten Seite, des Wannenbodens angeordnet. Erfindungsgemäß können die Heizelemente, insbesondere in Form von Warmwasserrohren, jeweils auch auf der Außenseite des Wannenbodens angeordnet sein.

Wie aus Figur 1c ersichtlich, weist das Heizpaneel gemäß einer bevorzugten Ausführungsform der Erfindung in Verbundaufbau eine Kernschicht 3 und eine obere Deckschicht 1 sowie eine untere Deckschicht 2 auf, die jeweils mittels eines Klebers mit der Kernschicht 3 verklebt sind. Die Kernschicht 3 weist eine Wabenstruktur mit sechseckigen Zellen auf, die sich über die gesamte Dicke der Kernschicht 3 hin durchlaufend erstrecken und derart angeordnet sind, daß die Waben zur oberen und zur unteren Deckschicht hin offen sind. Die Kernschicht 3, die obere Deckschicht 1 und die untere Deckschicht 2 sind aus Aluminium oder einer Aluminiumlegierung gefertigt. Wie ferner aus Figur 1c ersichtlich, ist unter der unteren Deckschicht 1 mit dieser in Verbindung stehend ein Heizflansch 4 lösbar angebracht. Der Querschnitt des Heizflansches 4 entspricht im wesentlichen dem einer Wanne. Das heißt, daß er im Querschnitt folgende Form aufweist: Auf einen ersten, ebenen Abschnitt, den Flanschrand 40, der als Auflagefläche für die Verbindung mit der Heizplatte dient, folgt ein ebenfalls eben ausgebildeter zweiter Abschnitt, der in an der Heizplatte angebrachtem Zustand vom diesem wegweist, so daß der erste Abschnitt und der zweite Abschnitt einen Winkel einschließen, der ca. 135° beträgt. An den zweiten Abschnitt schließt sich ein ebenfalls eben ausgebildeter mittlerer, dritter Abschnitt an, der parallel zum ersten Abschnitt und zur unteren Deckschicht 2 der Heizplatte verläuft. Die weitere Form des Heizflansches 4 ergibt sich dann durch Spiegelung an einer zum mittleren, dritten Abschnitt senkrecht verlaufenden Ebene, die den Heizflansch mittig teilt. Aufgrund der oben beschriebenen Form des Heizflansches 4 schließen dieser und die untere Deckschicht 2 bei dessen Anbringung an diese einen Hohlraum ein. Die Anbringung des Heizflansches 4 an die untere Deckschicht 2 erfolgt mit Schrauben 6, so daß die zur Anbringung an die untere Deckschicht 2 vorgesehenen Flanschränder 40 des Heizflansches 4 flächig und fest auf der unteren Deckschicht 2 aufliegen, damit eine gute Wärmeleitfähigkeit gewährleistet ist. In dem von der unteren Deckschicht und dem Heizflansch eingeschlossenen Hohlraum sind auf dem mittleren Abschnitt des Heizflansches in Abständen voneinander verteilt PTC-Heizelemente 5 angeordnet, die keinen direkten Kontakt zur Heizplatte haben und die einen gewissen Abstand von diesem aufweisen, so daß eine direkte Wärmeübertragung vom Heizelement 5 auf die Heizplatte lediglich durch Wärmestrahlung erfolgt. Die Wärmeübertragung erfolgt also im wesentlichen nur durch Wärmeleitung vom Heizelement 5 auf den Heizflansch 4.

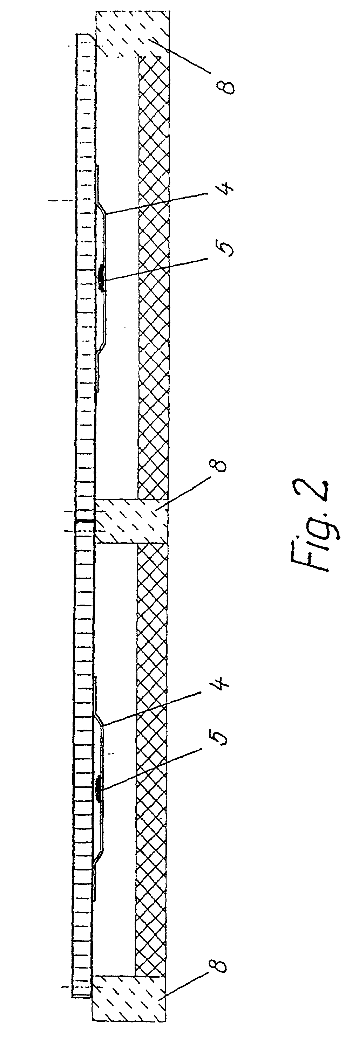

Aus Figur 2 ist ersichtlich, wie zwei Heizpaneele z.B. in das Führerhaus eines Eisenbahntriebwagens eingebaut sind. Die Heizpaneele liegen an ihren Rändern auf einem Rahmen 8 auf, so daß zwischen dem jeweiligen Heizpaneel und dem Unterboden 16 ein Hohlraum entsteht.

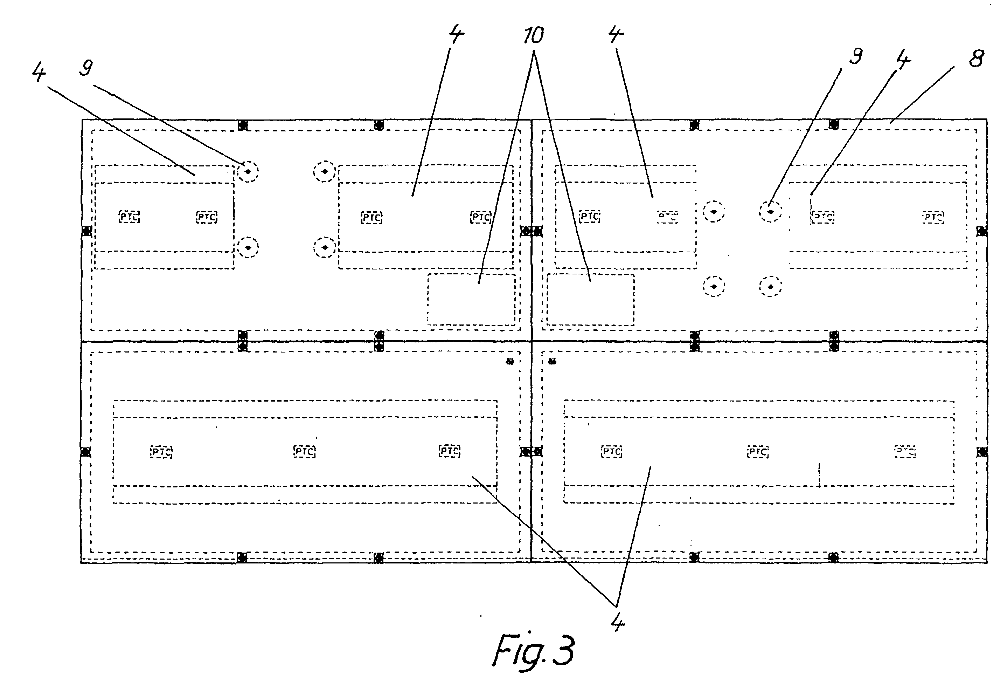

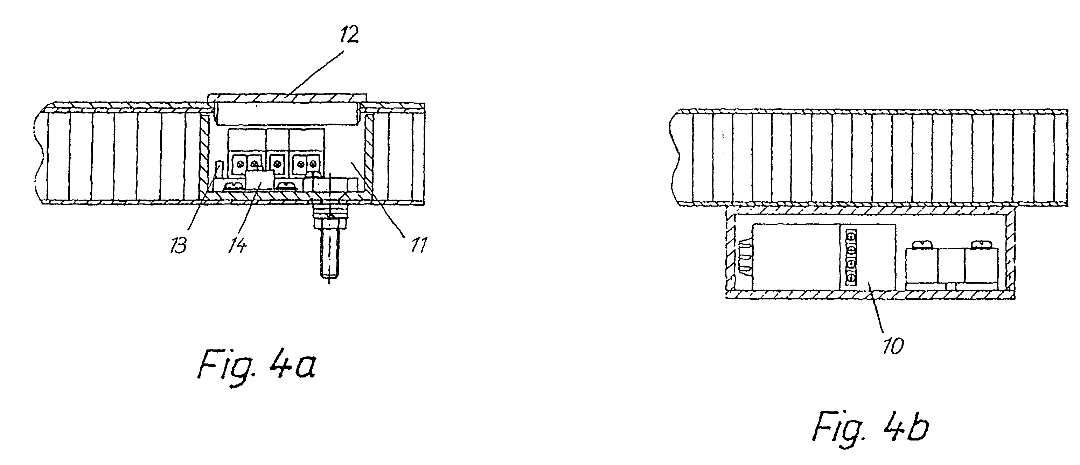

Wie aus Figur 3 ersichtlich, können für größere Bereiche mehrere Heizpaneele nebeneinander angeordnet sein. In Figur 3 gestrichelt dargestellt sind die unter den Heizplatten angebrachten Heizflansche 4 mit den darauf verteilt angeordneten PTC-Heizelementen sowie die unter den Heizplatten angebrachten Reglereinheiten 10, die die Heizleistung der Heizelemente mittels eines Regelkreises entsprechend einer voreingestellten Temperatur einregeln. Ein Schnitt der unter der Heizplatte angebrachten Reglereinheit 10 ist aus Figur 4b ersichtlich. Ebenfalls aus Figur 3 ist ersichtlich, daß zur Befestigung eines Sitzgestells in zwei Heizpaneelen Befestigungsbüchsen 9 vorgesehen sind.

Das für den Regelkreis erforderliche Temperaturmessen erfolgt mit einem in der Heizplatte integrierten Pt100-Temperatursensor 13, der, wie aus Figur 4a ersichtlich, zusammen mit einem Temperaturbegrenzer 14 in einer von oben zugänglichen und mit einem Deckel 12 verschließbaren Aussparung 11 in der Kernschicht vorgesehen ist. Auf diese Weise kann im Fall einer Prüfung oder eines Austauschs des Temperatursensors 13 oder des Temperaturbegrenzers 14 dies einfach durchgeführt werden, ohne daß das Paneel ausgebaut werden muß.

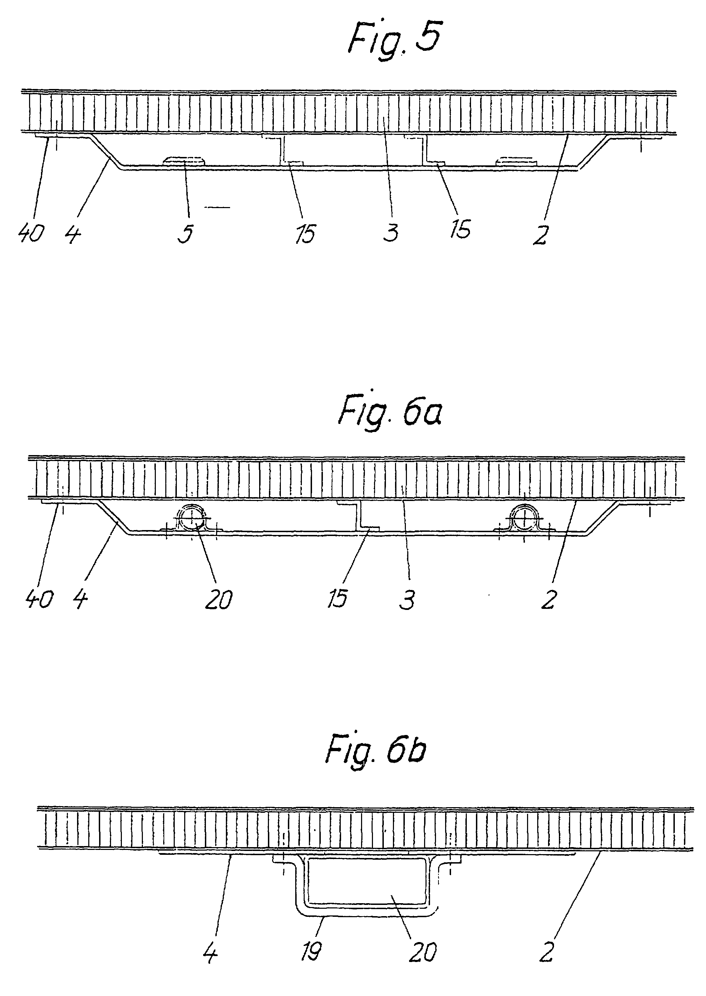

Aus Figur 5 ist ein mit PTC-Heizelementen beheiztes Heizpaneel gemäß einer anderen vorteilhaften Ausführungsform der Erfindung ersichtlich, bei dem der an der Unterseite der unteren Deckschicht 2 angebrachte Heizflansch 4 in Längsrichtung jeweils zwei nebeneinander angeordnete PTC-Heizelemente 5 aufweist. Zur Stabilisierung des Heizflansches und für eine gleichmäßige Wärmeübertragung sind jeweils zwischen den nebeneinander angeordneten PTC-Heizelementen zwei Doppelwinkelschienen 15 aus einem wärmeleitenden Material, insbesondere einem Metallmaterial, derart angeordnet, daß sie die untere Deckschicht 2 mit dem Boden des Heizflansches 4 wärmeleitend verbinden. Je größer die Querschnittsfläche der Doppelwinkelschienen 15 ist, umso größer ist die übertragbare Heizleistung.

Aus den Figuren 6a und 6b sind zwei verschiedene Ausführungsformen der Erfindung von mit Warmwasser beheizten Heizpaneelen ersichtlich. Bei dem aus Figur 6a ersichtlichen Heizpaneel sind auf der inneren Bodenfläche eines Heizflansches 4 zwei in Längsrichtung desselben verlaufende Warmwasserrohre 20 vorteilhaft mit Metallschellen befestigt. Ähnlich wie bei der aus Figur 5 ersichtlichen Ausführungsform, ist bei der aus Figur 6a ersichtlichen Ausführungsform die untere Deckschicht 2 der Heizplatte mit dem Boden des Heizflansches 4 mittels einer zwischen den Warmwasserrohren 20 angeordneten Doppelwinkelschiene 15 wärmeleitend verbunden. Die Warmwasserrohre 20 können derart miteinander verbunden sein, daß sie entweder jeweils als Vorlauf bzw. Rücklauf wirken, oder sie können von dem Warmwasser in gleiche Richtungen durchflossen werden.

Aus Figur 6b ist eine Anordnung ersichtlich, die insbesondere für hohe Wärmeübertragungsleistungen von z.B. 1 kW/m² geeignet ist. Dabei besteht der Heizflansch 4 nur aus Flanschrändern 40, die im Abstand voneinander an der unteren Deckschicht 2 befestigt sind, wobei das als Rechteckrohr ausgebildete Wasserrohr derart mit Bügeln 19 an dem Heizflansch 4 befestigt ist, daß es im Abstand von der Heizplatte angeordnet ist und an seiner Oberseite teilweise an dem Heizflansch 4 anliegt. Das Maß der Wärmeübertragung ist bei dieser Konstruktion im wesentlichen mittels der Größe der Kontaktfläche zwischen dem Warmwasserrohr 20 und dem Heizflansch 4 sowie dessen Wandstärke einstellbar, wobei eine größere Kontaktfläche und eine größere Wandstärke des Heizflansches 4 eine größere Wärmeübertragung bedeuten.

Die Wärmeleistung wird bei den mit Warmwasser beheizten, aus den Figuren 6a bzw. 6b ersichtlichen Ausführungsformen durch den Warmwasserdurchfluß durch die Rohre hindurch geregelt. Der Durchflußquerschnitt der Rohre und damit der Warmwasserdurchfluß- durch die Rohre hindurch ist mittels von einer Reglereinheit 10 ansteuerbarer Magnetventile (nicht gezeigt) veränderbar.

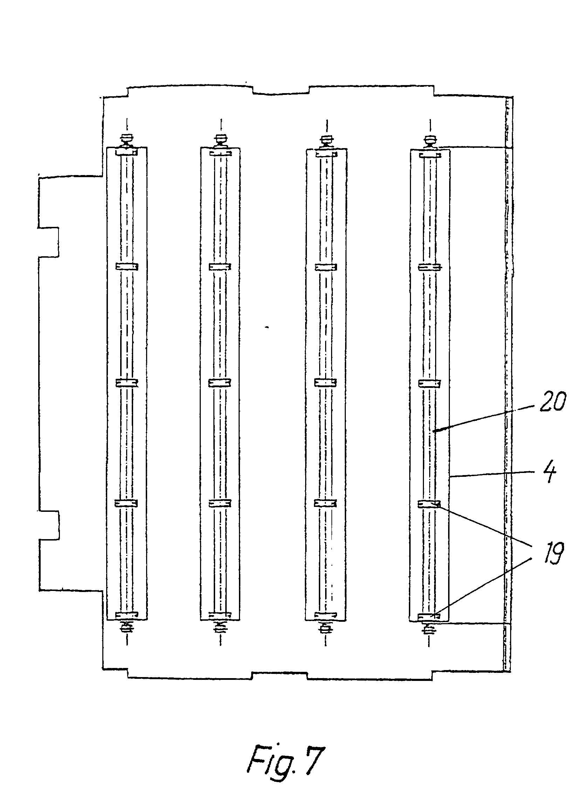

Aus Figur 7 eine Draufsicht auf ein mit Warmwasser beheiztes Heizpaneel gemäß einer bevorzugten Ausführungsform der Erfindung ersichtlich, bei dem vier Heizflansche 4 vorgesehen sind, auf denen jeweils ein Warmwasserrohr 20 mit Bügeln 19 befestigt ist.

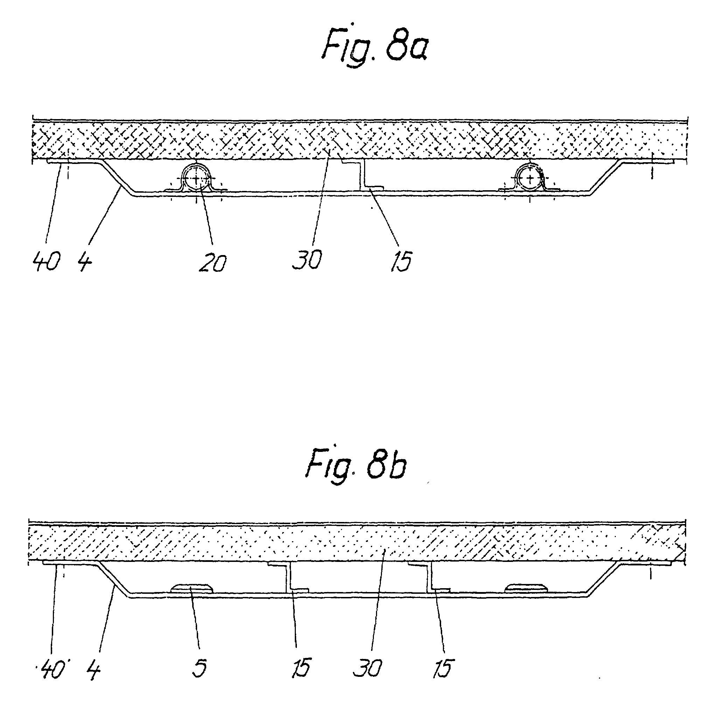

Anstatt eines Verbundaufbaus mit einer eine Wabenstruktur aufweiseden metallischen Kernschicht 3 kann das Paneel eine Metallschaumplatte 30 aufweisen. Heizpaneele mit einer solchen aufgeschäumtem Aluminiumplatte sind aus den Figuren 8a und 8b ersichtlich. Der jeweilige Aufbau entspricht dabei abgesehen von der Aluminiumschaumplatte dem Aufbau aus Figur 6a bzw. 5.

## Patentansprüche

1. Heizpaneel mit einer Heizplatte, die eine metallische, eine Wabenstruktur aufweisende Kernschicht (3) oder eine , Metallschaumplatte (30) aufweist, **dadurch gekennzeichnet, dass** an der Außenseite der Heizplatte eine Heizvorrichtung angebracht ist, die mindestens einen metallischen Heizflansch (4) mit mindestens einem plattenförmigen Flanschrand (40) und mindestens ein Heizelement (5) aufweist, wobei das Heizelement (5) an dem Heizflansch (4) in wärmeleitender Verbindung mit diesem und über einen Luftspalt oder eine Wärmedämmschicht getrennt im Abstand von der Heizplatte angeordnet ist, an der der Heizflansch (4) mit seinem Flanschrand (40) wärmeleitend befestigt ist.

2. Heizpaneel nach Anspruch 1, bei dem der Heizflansch (4) als Winkelprofilschiene ausgebildet ist.

3. Heizpaneel nach Anspruch 1 oder 2, bei dem der Heizflansch (4) im Querschnitt im wesentlichen dem einer Wanne entspricht; wobei der Heizflansch (4) mit seinen als Flänschrändern wirkenden Wannenrändern wärmeleitend auf einer Seite der Heizplatte angebracht ist, und auf der Innenseite oder der Außenseite des Wannenbodens mindestens ein Heizelement (5, 20) in Abstand von der Heizplatte wärmeleitend angebracht ist.

4. Heizpaneel nach einem der Ansprüche 1 bis 3, bei dem das Heizelement (5) ein PTC-Heizelement ist.

5. Heizpaneel nach einem der Ansprüche 1 bis 3, bei dem das Heizelement (20) ein Wasserrohr ist.

6. Heizpaneel nach Anspruch 5, bei dem der Heizflansch (4) aus zwei plattenförmigen Flanschrändern (40) besteht, die im Abstand voneinander an der Heizplatte angeordnet sind wobei das als Rechteckrohr ausgebildete Wasserrohr (20) im Abstand von der Heizplatte angeordnet ist und teilweise an den Flanschrändern (40) anliegt.

7. Heizpaneel nach einem der Ansprüche 1 bis 6, bei dem die Heizelemente (5, 20) an eine ihnen gemeinsame, die Heizleistung der Heizelemente (5, 20) regelnde Reglereinheit (10) angeschlossen sind.

8. Heizpaneel nach Anspruch 7, bei dem die Reglereinheit (10) wenigstenes einen Temperatursensor (13) und einen Temperaturbegrenzer (14) aufweist und der Temperatursensor (13) und/oder der Temperaturbegrenzer (14) in einer von oben zugänglichen und mit einem Deckel verschließbaren Aussparung in der Heizplatte vorgesehen sind/ist.

9. Heizpaneel nach einem der Ansprüche 1 bis 8, das als Bodenplatte einer Kabine eines Land-, Wasser- oder Schienenfahrzeugen ausgebildet ist.

10. Heizpaneel nach einem der Ansprüche 1 bis 9, bei dem die Wabenstruktur eine Honeycombstruktur mit im Querschnitt sechseckigen Wabenzellen aufweist.

11. Heizpaneel nach einem der Ansprüche 1 bis 10, bei dem die Kernschicht (3) oder das aufgeschäumte Metall aus Aluminium oder einer Aluminiumlegierung ist.

12. Heizpaneel nach Anspruch 11, bei dem die Kernschicht (3) mit jeweils einer Deckschicht (1, 2) aus Aluminium oder einer Aluminiumlegierung beschichtet ist.

13. Heizpaneel nach einem der Ansprüche 1 bis 12, bei dem die Hohlräume der Wabenstruktur mit einem Schalldämpfungsmaterial angefüllt sind.

14. Heizpaneel nach einem der Ansprüche 1 bis 13, das auf der Seite der Anbringung der Heizvorrichtung zur Außenseite hin mit einer Korkauflage oder einer Mineralwollauflage thermisch isoliert ist.

15. Verwendung eines Heizpaneels nach einem der Ansprüche 1 bis 14 in einem Fahrzeug, insbesondere einem Schienenfahrzeug, als Bodenpaneel, Wandpaneel oder Deckenpaneel einer Fahrzeugkabine.

## Claims

1. Heating panel with a heating plate that comprises a metallic core layer (3) comprising a cellular structure, or a foamed metal plate (30), **characterised in that** on the outside of the heating plate there is mounted a heating device, which comprises at least one metallic heating flange (4) having at least one plate-like flange edge (40), and at least one heating element (5), the heating element (5) being arranged on the heating flange (4) in connection therewith so as to conduct heat and spaced by way of an air gap or a thermal insulating layer from the heating plate, to which the heating flange (4) is secured so as to conduct heat with its flange edge (40).

2. Heating panel according to claim 1, in which the heating flange (4) is in the form of an angled profiled rail.

3. Heating panel according to claim 1 or 2, in which in cross-section the heating flange (4) corresponds substantially to that of a trough, the heating flange (4) with its trough edges acting as flange edges being mounted so as to conduct heat on one side of the heating plate, and on the inside or the outside of the trough base, spaced from the heating plate, there is mounted so as to conduct heat at least one heating element (5, 20).

4. Heating panel according to any one of claims 1 to 3, in which the heating element (5) is a PTC heating element.

5. Heating panel according to any one of claims 1 to 3, in which the heating element (20) is a water pipe.

6. Heating panel according to claim 5, in which the heating flange (4) consists of two plate-like flange edges (40) that are arranged spaced from one another on the heating plate, the water pipe (20) in the form of a rectangular pipe being arranged spaced from the heating plate and lying partially on the flange edges.

7. Heating panel according to any one of claims 1 to 6, in which the heating elements (5, 20) are connected to a common regulator unit (10) regulating the heating capacity of the heating elements (5, 20).

8. Heating panel according to claim 7, in which the regulator unit (10) comprises at least one temperature sensor (13) and a temperature limiter (14) and the temperature sensor (13) and/or the temperature limiter (14) arelis provided in a recess in the heating plate, the recess being accessible from the top and closable with a cover.

9. Heating panel according to any one of claims 1 to 8, which is in the form of a floor plate of a cabin of a land vehicle, water vehicle or rail vehicle.

10. Heating panel according to any one of claims 1 to 9, in which the cellular structure comprises a honeycomb structure having honeycomb cells of hexagonal cross-section.

11. Heating panel according to any one of claims 1 to 10, in which the core layer (3) or the foamed metal is of aluminium or an aluminium alloy.

12. Heating panel according to claim 11, in which the core layer (3) is coated with covering layers (1, 2) of aluminium or an aluminium alloy.

13. Heating panel according to any one of claims 1 to 12, in which the cavities of the cellular structure are filled with a soundproofing material.

14. Heating panel according to any one of claims 1 to 13, which, on the side on which the heating device is mounted, is thermally insulated towards the outside with a cork layer or a mineral wool layer.

15. Use of a heating panel according to any one of claims 1 to 14 in a vehicle, especially a rail vehicle, as floor panel, wall panel or ceiling panel of a vehicle cabin.

## Revendications

1. Panneau chauffant avec une plaque chauffante qui comporte une couche centrale métallique (3) présentant une structure alvéolaire ou une plaque 30 à structure alvéolaire métallique (30), **caractérisé en ce qu'**est disposé, sur la face externe de la plaque chauffante, un dispositif de chauffage présentant au moins une bride chauffante métallique (4) avec au moins un bord de bride (40) en forme de plaque, et au moins un élément chauffant (5), l'élément chauffant (5) étant disposé sur la bride chauffante (4) en liaison conductrice de la chaleur avec la bride et l'élément chauffant étant séparé par un intervalle d'air ou une couche calorifuge sur laquelle la bride chauffante (4) est fixé par son bord de bride (40) en conduisant la chaleur.

2. Panneau chauffant selon la revendication 1, dans lequel la bridé chauffante (4) est réalisée en barre à profil de cornière.

3. Panneau chauffant selon la revendication 1 ou 2, dans lequel la bride chauffante 4 correspond sensiblement en section transversale à une cuve, la bride chauffante 4 étant agencée sur une face de la plaque chauffante en conduisant la chaleur, avec ses bords de cuve agissant comme des bords de bride, et dans lequel sur la face interne ou externe du fond de cuve, au moins un élément chauffant (5, 20) est maintenu à distance de la plaque chauffante, en conduisant la chaleur.

4. Panneau chauffant selon Tune des revendications 1 à 3, dans lequel l'élément chauffant (5) est un élément chauffant à coefficient positif de température (PTC).

5. Panneau chauffant selon l'une des revendications 1 à 3, dans lequel l'élément chauffant est une canalisation d'eau (20).

6. Panneau chauffant selon la revendication 5, dans lequel la bride chauffante (4) est constituée de deux bords (40) de bride en forme de plaque, qui sont agencés à distance l'un de l'autre sur la plaque chauffante, et dans lequel la canalisation d'eau (20), de section rectangulaire, est disposée à distance de la plaque chauffante et repose partiellement sur les bords de bride (40).

7. Panneau chauffant selon Tune des revendications 1 à 6, dans lequel les éléments chauffants (5, 20) sont contenus dans une unité (10) de réglage commune réglant la puissance de chauffage des éléments chauffants (5, 20).

8. Panneau chauffant selon la revendication 7, dans lequel l'unité (10) de réglage présente au moins un capteur (13) de température et un limiteur (14) de température, le capteur (13) de température et/ou le limiteur (14) de température étant disposé(s) dans une cavité de la plaque chauffante, accessible par le haut et susceptible d'être fermée par un couvercle.

9. Panneau chauffant selon l'une des revendications 1 à 8, qui est réalisé comme dalle de plancher dune cabine de véhicule terrestre, maritime ou fluvial, ou ferroviaire.

10. Panneau chauffant selon l'une des revendications 1 à 9, dans lequel la structure alvéolaire présente une structure en nids-d'abeilles avec des cellules alvéolaires hexagonales en section transversale.

11. Panneau chauffant selon Tune des revendications 1 à 10, dans lequel la couche centrale (3) ou le métal alvéolaire est en aluminium ou en alliage d'aluminium.

12. Panneau chauffant selon la revendication 11, dans lequel la couche centrale (3) est recouverte chaque fois dune couche (1, 2) de revêtement en aluminium ou en alliage d'alumblium.

13. Panneau chauffant selon l'une des revendications 1 à 12, dans lequel les trous ou espaces creux de la structure alvéolaire sont remplis avec un matériau amortissant le bruit.

14. Panneau chauffant selon l'une des revendications 1 à 13, qui est isolé thermiquement par un revêtement en liège ou un revêtement en laine minérale, sur la surface sur laquelle est fixé le dispositif chauffant, par rapport à la face extérieure.

15. Utilisation d'un panneau chauffant selon l'une des revendications 1 à 14 dans un véhicule, en particulier dans un véhicule ferroviaire, en tant que panneau de plancher, de paroi ou de plafond dune cabine de véhicule.
